# EUROPÄISCHE PATENTSCHRIFT

(11) **EP 2 052 345 B1**
(45) Veröffentlichungstag und Bekanntmachung des Hinweises auf die Patenterteilung: **14.04.2010**
(21) Anmeldenummer: 06792708.7
(22) Anmeldetag: 04.08.2006
(51) Int. Cl.: G06F 21/20

(54) **VERFAHREN ZUR ANONYMEN ANALYSE AUTHENTIFIZIERENDER IDENTITÄTS-CODES EINES BENUTZERS ODER EINES OBJEKTS**
METHOD FOR THE ANONYMOUS ANALYSIS OF AUTHENTICATING IDENTITY CODES OF A USER OR AN OBJECT
PROCÉDÉ D'ANALYSE ANONYME DE CODES D'IDENTITÉ D'AUTHENTIFICATION D'UN UTILISATEUR OU D'UN OBJET

(43) Veröffentlichungstag der Anmeldung: 29.04.2009
(73) Patentinhaber: Zahnd, Rolf, 3046 Wahlendorf (CH)
(72) Erfinder: Zahnd, Rolf, 3046 Wahlendorf (CH)
(74) Vertreter: Scheuzger, Beat Otto
(86) Internationale Anmeldenummer: PCT/EP2006/065083
(87) Internationale Veröffentlichungsnummer: WO 2008/014828

(56) Entgegenhaltungen:
- US-A1- 2003 163 694
- US-A1- 2006 155 985
- US-B1- 6 938 022

## Beschreibung

### Technisches Umfeld

Die vorliegende Erfindung bezieht sich auf ein Verfahren zur anonymen Analyse authentifizierender Identitäts-Codes eines Benutzers oder eines Objekts.

Eine Person identifiziert sich aktuell in erster Linie mit ihrem Namen und Vornamen. Präzisiert wird mit öffentlich bekannten persönlichen Eigenschaften wie Adressangaben oder dem Gesicht. Eine erhöhte Genauigkeit ergeben unveränderliche persönliche Eigenschaften wie Geburtsdatum, Sozialversicherungsnummer, biometrische Daten, die, meist in Verbindung mit einem Foto, in Dokumenten wie Pässen als Ausweis verwendet werden. Weltweit ist kein Standard abzusehen, jedes Land verfolgt einen eigenen Weg.

Bis zum Zeitalter der Informatik und Globalisierung hat dies ausgereicht. Heute wird aber immer häufiger eine Identifizierung auf Distanz notwendig, zum Beispiel bei der Anmeldung an einem Firmenserver, beim e-Banking oder Einkauf über das Web. Gelöst wird dieses Problem mit proprietären Insellösungen, z.B. in Form von Logins, Passwörtern oder Kreditkartennummern. Diese Lösungsansätze weisen gravierende Nachteile auf: Fälschungen und Missbrauch sind an der Tagesordnung und der Datenschutz wird oft verletzt, sei es durch Kombination verschiedenster Daten oder durch Lecks in Datenverwaltung. Versuche, diese Gefahren einzudämmen, führen oft zu unpraktischen Verfahren wie Streichcodes-Listen, unhandlichen Tokens oder teuren und nur sehr beschränkt einsetzbaren elektronischen Signaturen.

Die Analyse der Problematik zeigt zwei Hauptprobleme: Erstens gibt es keine öffentlich zugänglichen eindeutigen Identitäten, die für sich allein eine Person oder ein Objekt mit Sicherheit identifizieren und nicht sprechend sind, das heisst durch Aussenstehende nicht zugeordnet werden können. Wenn es sie gäbe, wären sie extrem missbrauchsgefährdet, wie zum Beispiel der genetische Code oder biometrische Daten. Zweitens liegt ein bisher nicht berücksichtigtes Gefahrenpotential darin, dass die Instanz, die nicht sprechende Identitäten wie Codes verleiht, diese Codes in einer Datenbank mit identifizierenden Angaben verbindet, das heisst die Person oder das Objekt selber kennt. Damit kann Missbrauch grundsätzlich nicht ausgeschlossen werden.

Es gilt also, ein Verfahren zu entwickeln, das eindeutig authentifizierende, nicht sprechende Identitätscodes Personen oder Objekten zuordnet, ohne deren wahre Identität zu kennen. Einem solchen Ansinnen stehen nicht nur ökonomische Überlegungen entgegen, denn eine solche Dienstleistung müsste ja bezahlt werden können, was in einem anonymen Verhältnis nicht geht. Es muss auch ausgeschlossen werden, dass ein solch anonymisierendes System von Kriminellen missbraucht wird.

Der aktuelle Stand der Technik bietet kein entsprechendes System an, obwohl jeweilige Teilkomponenten bereits bekannt sind. Beispiele:
US2003163694
Dieses Verfahren erlaubt es webbasierten Authentifizierungs-Autoritäten irreversible Einmal-Identitätscodes für ihre Dienste zu verwenden. In diesem System kennt die Authentifizierungs-Autorität sowohl das Identitäten-Generierungsverfahren als auch die wahre Identität des zu Authentifizierenden.
US6938022
Dieses Verfahren erlaubt es, Informationssysteme anonym zu verwenden und Transaktionen anonym durchzuführen. Das anonymisierende System erhält hier aber identifizierende Daten direkt vom zu Anonymisierenden. Falls diese wie erwähnt vor den Operators des Systems verborgen blieben, kann das Verfahren kriminellen Missbrauch nicht verhindern.

US 2006 155 985 Dieses Verfahren verfügt über Authentifizierung, widerrufbare Anonymität und Nachweisbarkeit.

### Offenbarung der Erfindung

Das hier beschriebene Verfahren ordnet eindeutig authentifizierende, nicht sprechende Identitäts-Codes Personen oder Objekten zu, ohne deren wahre Identität zu kennen.

Diese hohen Ansprüche werden technisch durch die Auftrennung in voneinander unabhängige Teil-Prozesse und Teil-Systeme sowie deren Zusammenwirken erfüllt: Die Teil-Prozesse: Authentifizierung > Initialisierung > Identitäten-Generierung > Identitäten-Management. Die Teil-Systeme: Dienstleistungssystem > Identitäten-Zentrale > Identitäten-Generierungssystem > Identitäten-Managementsystem.

Authentifizierung

Der zugrunde liegende Teilprozess der Authentifizierung, das heisst die Verbindung des Gesamtsystems mit dem Benutzer (der zu identifizierenden Person oder dem zu identifizierenden Objekt respektive dessen Vertreter) wird einem externen Dienstleistungssystem übertragen, das im direkten persönlichen Kontakt zum Benutzer steht. Es übernimmt neben der Authentifizierung durch anerkannte Verfahren weitere Aufgaben wie die Übermittlung von Daten, Finanzdienstleistungen und Rechtsverpflichtungen als Mittler zwischen dem Gesamtsystem und dem Benutzer. Nach Vorgabe einer Identitäten-Zentrale übermittelt der Benutzer dem Dienstleistungssystem ein definiertes eindeutiges, nicht sprechendes Identifikationsmerkmal, das dort, zusammen mit den übrigen Personalien, gespeichert wird. Im Gegenzug erhält er vom Dienstleistungszentrum ein diesem von der Identitäten-Zentrale zugeordnetes nicht sprechendes Merkmal.

Initialisierung

Das Identifikations-Merkmal des Benutzers wird vom Dienstleistungssystem, zusammen mit dem eigenen Merkmal, an die Identitäten-Zentrale übermittelt und dort, zusammen mit einem Stamm-Code und einem von diesem unabhängigen Basis-Code, gespeichert. Bei Bedarf kann dieser Basis-Code verändert werden. Diese Datenbank ist technisch isoliert und unterliegt höchster Geheimhaltung.

Aus dieser Datenbank wird der Basis-Code an ein Identitäten-Generierungssystem übermittelt, das nach einem von der Identitäten-Zentrale definierten Verfahren daraus eindeutige Identitäten generiert, die reversibel sind, das heisst, wieder auf den Basis-Code zurückgeführt werden können. Dieses Verfahren unterliegt ebenfalls höchster Geheimhaltung und kann bei Bedarf verändert werden.

Für die Initialisierung wird im Identitäten-Generierungssystem ein 1. Satz eindeutiger Identitäts-Codes generiert. Diese Codes werden innerhalb dieses TeilSystems sofort gesperrt, können also nicht ein zweites Mal produziert werden. Nur im Rahmen der Initialisierung wird eine definierte Anzahl Identitäts-Codes als Initialisierungs-Codes, zusammen mit dem Basis-Code an die Identitäten-Zentrale übermittelt und dort gespeichert. Die Initialisierungs-Codes werden, zusammen mit dem Identifikations-Merkmal und einer Zugangsadresse zu einem Identitäten-Managementsystem übermittelt, wo sie, gemäss Vorgabe des Identitäten-Generierungssystems, zwischengespeichert und, zusammen mit dem Merkmal des Dienstleistungssystems, an den Benutzer übermittelt werden. Das Identitäten-Generierungssystem übermittelt ferner die Initialisierungs-Codes, zusammen mit dem Merkmal des Dienstleistungssystems und den übrigen im 1. Satz generierten Identitäts-Codes, an das Identitäten-Managementsystem, wo sie gespeichert werden.

Die Initialisierung findet ihren Abschluss, indem der Benutzer sich über die Zugangsadresse mittels den Initialisierungs-Codes und dem Merkmal des Dienstleistungssystems erstmals und anonym beim Identitäten-Managementsystem anmeldet. Nach dem positiv ausgefallenen Vergleich der Datensätze werden die verwendeten Initialisierungs-Codes gesperrt und der Benutzer kann sein Konto beim Identitäten-Managementsystem eröffnen, indem er eine Serie von persönlichen Pass-Informationen definiert. Danach werden ihm die restlichen Identitäts-Codes der 1. Serie übermittelt.

Identitäten-Generierung

Die Identitäten-Generierung (2. Serie und Folgende) erfolgt ähnlich der Generierung der 1. Serie. Sie wird durch den Benutzer initiiert, der sich erfolgreich in sein Konto beim Identitäten-Managementsystem eingewählt hat, wozu er einen Identitätscode und eine richtige Pass-Information benötigt. Der verwendete Identitäts-Code wird dabei gesperrt und kann nicht ein zweites Mal verwendet werden. Das Identitäten-Managementsystem übermittelt die Bestellung, zusammen mit dem verwendeten Identitäts-Code, an das Generierungs-System. Dieses weist diesen dem entsprechenden Basis-Code zu, generiert die 2. oder folgende Serie von Identitäts-Codes, sperrt sie und übermittelt sie, zusammen mit dem zur Bestellung verwendeten Identitäts-Code, an das Identitäten-Managementsystem, das sie abspeichert und an den Benutzer übermittelt.

Identitäten-Management

Die Identitäts-Codes können vom Benutzer in Zusammenspiel mit dem Identitäten-Managementsystem auf verschiedene Arten genutzt werden:
- Selbst-Identifizierung: Durch die Übermittlung eines Identitäts-Codes an das Identitäten-Managementsystem wird der Benutzer identifiziert. Dies kann ihn zu vordefinierten Prozessen autorisieren. Der benutzte Identitäts-Code wird gesperrt und kann kein zweites Mal verwendet werden. Die Autorisierung wird protokolliert.
- Selbst-Authentifizierung: Siehe Selbst-Identifizierung. Der Unterschied besteht darin, dass das Identitäten-Managementsystem zusätzlich Pass-Informationen abfrägt und damit sicherstellt, dass der Übermittler des Identitäts-Codes tatsächlich der Benutzer selbst ist, was die Sicherheit der Autorisierung erhöht.
- Offenlegung eines Identitäts-Codes: Der Benutzer übermittelt einen seiner Identitäts-Codes an einen Dritten, zusammen mit Personalien, die ihn identifizieren. Ist der Dritte selber Benutzer, kann er diesen erhaltenen Code zusammen mit einem eigenen Identitäts-Code in seinem Konto als Paar abspeichern und die Gültigkeitsdauer bestimmen. Erhält der Dritte nun einen weiteren Identitäts-Code des Benutzers, wird dieser durch das Identitäten-Managementsystem validiert, gesperrt und der Benutzer bei Übereinstimmung gegenüber dem Dritten identifiziert. Ist der Dritte nicht selber Benutzer, erhält er vom Identitäten-Managementsystem bei Übermittlung beider Identitäts-Codes die Rückmeldung, dass der Benutzer existiert und identifiziert ist. Beide Codes werden dabei gesperrt, wenn nicht der Benutzer in seinem Konto den zuerst übermittelten Code mit einer Gültigkeitsdauer zum mehrmaligen Gebrauch freigegeben hat. Alle diese Vorgänge werden im Identitäten-Managementsystem protokolliert. Sie erlauben die Autorisierung von Prozessen oder Transaktionen, auch solcher, die vorgängig im Identitäten-Managementsystem definiert wurden. Die Dritten können ihre Sicherheit erhöhen, indem sie eine Authentifizierung des Benutzers verlangen, die das Identitäten-Managementsystem durch zusätzliche Abfrage von Pass-Informationen vornimmt und gegenüber dem Dritten bestätigt.
- Abwicklung anonymer Prozesse: Der Benutzer kann Dritten einen Identitäts-Code ohne Offenlegung seiner echten Identität übermitteln. Diese können damit wie oben beschrieben den Benutzer durch das Identitäten-Managementsystem identifizieren oder authentifizieren lassen, und danach zu Prozessen oder Transaktionen autorisieren, ohne den Benutzer zu kennen. Ist der Dritte selber Benutzer, hat er durch die Protokollierung wichtige Beweismittel in der Hand. In jedem Fall aber kann bei Missbrauch von dazu autorisierten Drittpersonen über die Identitäten-Zentrale und das Dienstleistungszentrum auf den Benutzer zugegriffen werden, ohne dass dessen echte Identität im System bekannt wird.
- Reversibel anonyme Kennzeichnung persönlicher Daten: heikle persönliche Daten des Benutzers können durch den Benutzer oder Dritte allein mit Identitäts-Codes des Benutzers gekennzeichnet und gespeichert werden. Der Benutzer kann Dritte, die selber Benutzer sind, im Identitäten-Managementsystem autorisieren, durch dieses Suchläufe durchführen zu lassen, die es ihnen erlauben, dem Benutzer zugeordnete Daten zusammenzuführen, ohne dessen Identität zu erfahren. Diese Anwendung erlaubt nicht nur eine hohe Sicherheit besonders schützenswerter Daten sondern auch Langzeit-Forschungsprojekte, die bislang an der Irreversibiliät von Anonymisierungen scheiterten.

Durch die Bereitstellung des Identitäten-Managementsystems können damit nicht nur Personen profitieren sondern auch Organisationen, die als Objekte ebenfalls Identitäts-Codes erhalten können, und zwar Organisations-, Mitarbeiter- oder Sachbezogene Identitäten. Durch die Vergabe eigener Identitäts-Codes zum Beispiel an Kunden, eröffnen sich zusätzliche Möglichkeiten. Damit können hohe Kosten für eigene Identifizierungs- oder Authentifizierungsprozesse eingespart werden. Treten gar Staaten als Dienstleistungssysteme auf, können sie eigene Verfahren kostengünstiger gestalten und die Sicherheit der Identitäts-Codes auf ein Maximum heben.

Hacker-Angriffe auf Datenbanken stossen ins Leere, wenn dort Identitäts-Codes statt Namen stehen. Spionage-Software ist nutzlos, wenn Logins jedesmal wechseln. Spams werden unmöglich, wenn die e-mail-Adressen häufig wechseln. Unpraktische Streich-Listen gehören der Vergangenheit an. Aber auch kriminelle Akte können zurück gedrängt werden, weil jeder Prozess protokolliert wird und bei Bedarf auf den oder die Benutzer zurückgeführt werden kann.

Durch die technische Aufteilung in voneinander unabhängige Einheiten ergeben sich verschiedene Vorteile und neue Möglichkeiten:
- Sicherheit: Von der Anlage her ist der Schutz des Benutzers bereits auf höchstem Niveau. Seine echte Identität kann durch das System per definitionem nicht ermittelt werden, wenn diese nicht durch den Benutzer selber aus Unachtsamkeit verraten wird. Aber selbst bei Infiltration des Systems mit Kriminellen kann es nicht zu Missbräuchen kommen. Die interne Separation verhindert zuverlässig, dass ein Mitarbeiter die Sicherheit des Gesamtsystems gefährden kann.
- Dezentralisierung und Skalierbarkeit: Durch die technische Aufteilung kann das System beliebig ausgebaut werden. Die Identitäten-Generierung ist auf globale Verhältnisse ausgerichtet, das heisst, der Schritt zu der bis anhin unmöglichen Welt-Identität ist denkbar. Der dazu notwendige Ausbau ist durch Dezentralisierung von Sub-Einheiten unter zentraler Führung möglich. Und die Reversibilität der Identitäts-Codes würde sogar die Generierung von Identitäts-Codes sowie deren Validierung durch eingegossene Sub-Systeme für bestimmte Anwendungen ermöglichen, selbst in miniaturisierter Form wie einer Smartcard.

Es ist eine Aufgabe der vorliegenden Erfindung, ein Verfahren zur anonymen Analyse authentifizierender Identitäts-Codes eines Benutzers oder eines Objekts vorzuschlagen, welches Verfahren nicht die Nachteile des Standes der Technik aufweist.

Gemäss der vorliegenden Erfindung werden diese Ziele insbesondere durch die Merkmale der unabhängigen Ansprüche erreicht. Weitere vorteilhafte Ausführungsformen gehen ausserdem aus den abhängigen Ansprüchen und der Beschreibung hervor.

Insbesondere werden die Ziele durch die vorliegende Erfindung dadurch erreicht, dass durch eine Identitäten-Zentrale ein Identifikations-Merkmal bestimmt wird, dass nach einer Authentifizierung des Benutzers oder eines Vertreters des Objekts das Identifikations-Merkmal in einem Dienstleistungssystem den Stammdaten des Benutzers oder des Objekts zugeordnet abgespeichert wird, dass das Identifikations-Merkmal und ein Merkmal des Dienstleistungssystems an die Identitäten-Zentrale übermittelt werden und dort zusammen mit einem geheimen Stamm-Code und einem unabhängigen Basis-Code abgespeichert werden,
dass der Basis-Code von der Identitäten-Zentrale an ein Identitäten-Generierungssystem übermittelt wird, dass mittels eines festlegbaren Verfahrens dem Basis-Code eindeutig zugeordnete Identitäts-Codes erzeugt werden, dass das Identitäten-Generierungssystem die erzeugten Identitäts-Codes sperrt, dass die erzeugten Identitäts-Codes an ein Identitäten-Managementsystem übermittelt werden, dass aus den erzeugten Identitäts-Codes für den Initialisierungsprozess einmalig Initialisierungs-Codes bestimmt und in der Identitäten-Zentrale abgespeichert werden, dass die Initialisierungs-Codes zusammen mit dem Identifikations-Merkmal und einer Zugangs-Adresse des Identitäten-Managementsystems an das Dienstleistungssystem übermittelt werden, dass durch das Identitäten-Managementsystem über die Zugangsadresse des Identitäten-Managementsystems Initialisierungs-Codes und geheime Pass-Informationen empfangen werden, wobei ein Benutzerkonto zur Erzeugung von weiteren Identitäts-Codes konfiguriert wird,
dass durch das Identitäten-Managementsystem ein Identitäts-Code empfangen und analysiert wird. Ein solches Verfahren hat insbesondere den Vorteil, dass nur sicher authentifizierte und eruierbare Benutzer zugelassen werden, das System, welches Identitäts-Codes generiert, zuordnet bzw. verwaltet, die wahre Identität der Benutzer nicht kennt, aber trotzdem anonym mit diesen in direkter Beziehung steht.

In einer Ausführungsvariante werden mehrere Identitäts-Codes eines oder mehrerer Benutzer oder Objekte kombiniert analysiert. Ein solches Verfahren hat insbesondere den Vorteil, dass allein durch den Vergleich von Identitäts-Codes Benutzer sicher identifiziert und damit Autorisierungen oder andere Prozesse ausgelöst werden können.

In einer anderen Ausführungsvariante wird die Analyse eines Identitäts-Codes zusammen mit einer Abfrage von Pass-Informationen durchgeführt. Ein solches Verfahren hat insbesondere den Vorteil, dass Benutzer nicht nur sicher identifiziert sondern auch authentifiziert werden, das heisst, sichergestellt werden kann, dass der Besitzer des Identitäts-Codes auch wirklich der dazu gehörende Benutzer ist.

In einer weiteren Ausführungsvariante wird die Übermittlung des Identifikations-Merkmals an die Identitäten-Zentrale durch den Benutzer oder Vertreter des Objekts freigegeben. Ein solches Verfahren hat insbesondere den Vorteil, dass eine missbräuchliche Verwendung des Identifikations-Merkmals resp. die ungewollte Anmeldung des Benutzers an die Identitäten-Zentrale verhindert wird und der Schutz der Persönlichkeits- und Datenschutzrechte erhöht wird.

In einer anderen Ausführungsvariante werden die Stammdaten des Benutzers im Dienstleistungssystem vom Dienstleistungssystem zu bestimmten, vom Identitäten-Generierungssystem festgelegten, Zeitpunkten überprüft und nachgeführt. Ein solches Verfahren hat insbesondere den Vorteil, dass sichergestellt werden kann, dass jeder Identitäts-Code wie versprochen und juristisch notwendig auch wirklich jederzeit physisch bis zum betreffenden Benutzer oder Objekt zurückverfolgt werden kann.

In einer weiteren Ausführungsvariante kann die Identitäten-Zentrale die Gültigkeit eines oder mehrerer Basis-Codes festlegen und diese bei Bedarf wechseln, wobei die eindeutige Zuordnung zu den Stamm-Codes erhalten bleibt. Ein solches Verfahren hat insbesondere den Vorteil, dass im Fall einer kriminellen Aufdeckung von Basis-Codes oder im Rahmen eines vorbestimmten Sicherheitsdispositivs der rasche Wechsel des Ursprungs der Identitäts-Codes von Benutzern oder Objekten ermöglicht wird, wobei die Nachvollziehbarkeit gewährleistet bleibt.

In einer anderen Ausführungsvariante erfolgt die Übermittlung von Daten zwischen dem Dienstleistungssystem, dem Identitäten-Generierungssystem und/oder dem Identitäten-Managementsystem mittels mindestens eines Datennetzwerks und/oder Telekommunikationsnetzwerks. Ein solches Verfahren hat insbesondere den Vorteil, dass eine physische Trennung der einzelnen Teilsysteme ermöglicht wird, was die Anonymisierung sicherer und extern überprüfbar macht.

In einer weiteren Ausführungsvariante sind die vom Identitäten-Managementsystem angeforderten Pass-Informationen Antworten auf vom Identitäten-Managementsystem gestellte Fragen und/oder Daten, die von Geräten, wie Tokens, Smartcards oder Mobilephones gesendet werden. Ein solches Verfahren hat insbesondere den Vorteil, dass die Sicherheit der Authentifizierung zusätzlich erhöht wird, da der sich authentifizierende Benutzer nicht zum voraus weiss, welche Pass-Information er zu liefern hat. Die Abfrage elektronisch generierter Daten ermöglicht insbesondere auch halb- oder vollautomatische Identifizierungs- oder Authentifizierungsvorgänge.

In einer anderen Ausführungsvariante bestellt das Identitäten-Managementsystem auf Anforderung des Benutzers im Rahmen der Konto-Verwaltung beim Identitäten-Generierungssystem weitere Identitäten, die dort nach dem beschriebenen Verfahren hergestellt, gesperrt, an das Identitäten-Managementsystem übermittelt und dort dem Benutzer nach Bedarf übermittelt werden. Ein solches Verfahren hat insbesondere den Vorteil, dass die Generierung und Verwendung praktisch unbegrenzt vieler eindeutiger Identitäts-Codes pro Benutzer oder Objekt ermöglicht wird, was deren Anwendbarkeit verbessert und das Missbrauchsrisiko senkt.

In einer weiteren Ausführungsvariante stellt die Konto-Verwaltung dem Benutzer neben der Anforderung neuer Identitäts-Codes weitere Funktionen zur Verfügung, wie Verwaltung einer Datenbank, Abändern der Gültigkeit, Sperren, Anbinden an Fremd-Identitäten, Verbindung mit einem Bankkonto, Kopplung mit definierten Transaktionen und/oder Wechsel der Pass-Informationen. Ein solches Verfahren hat insbesondere den Vorteil, dass eine Voraussetzung zur Nutzung des Systems für komplexere Aufgaben sowie zur vollständigen Kontrolle durch den Benutzer und/oder Vertreter des Objekts geschaffen wird.

In einer anderen Ausführungsvariante übermittelt der Benutzer einzelne seiner Identitäts-Codes unter Festlegung ihrer Gültigkeit offen oder anonym an Dritte und schafft dadurch die Voraussetzung, dass diese ihn einzig auf Grund einer weiteren übermittelten Identität durch das Identitäten-Managementsystem identifizieren und/oder unter Einschaltung der Passinformations-Abfrage authentifizieren lassen können. Ein solches Verfahren hat insbesondere den Vorteil, dass eine wesentliche Aufwertung eines Identitäts-Codes erzielt wird, was dessen Verwendungsmöglichkeiten im Zusammenhang mit definierten Prozessen des Identitäten-Managementsystems verbessert.

In einer weiteren Ausführungsvariante erfolgen Identifizierungen über den Vergleich zweier Identitäts-Codes durch das Identitäten-Managementsystem, wobei dem dazu autorisierten Anfragenden das Resultat der Überprüfung übermittelt wird und eine zusätzliche Authentifizierung der Identität durch die Zwischenschaltung einer Pass-Informations-Abfrage ergänzt werden kann. Ein solches Verfahren hat insbesondere den Vorteil, dass die Anwendungsmöglichkeiten durch die Implementierung eines Rückmeldeprozesses an die anfragende Stelle erweitert werden.

In einer anderen Ausführungsvariante werden dem Identitäten-Managementsystem durch den Benutzer oder Vertreter eines Objekts Kombinationen von Identitäts-Codes unterschiedlicher Benutzer oder Objekte zur Speicherung übermittelt, die von diesem dazu verwendet werden, künftige Transaktionen mit andern Identitäts-Codes derselben Partner zu steuern und/oder zu beurteilen. Ein solches Verfahren hat insbesondere den Vorteil, dass, durch die Fähigkeit des Identitäten-Managementsystems, Identitäts-Codes-Kombinationen (mehrerer Benutzer und/oder Objekte) zu verarbeiten, automatische Prozessabläufe ermöglicht werden.

In einer weiteren Ausführungsvariante werden Identitäts-Codes eines Benutzers als e-mail-Adressen genutzt und, bei einmaliger Verwendung, auf seinen Auftrag hin durch das Identitäten-Managementsystem zusammengeführt. Ein solches Verfahren hat insbesondere den Vorteil, dass die Verwendung von Identitäts-Codes als e-mail-Adresse, also z.B. Identitäts-Code@Provider, bisher nicht mögliche resp. rechtlich fragwürdige anonyme e-mail-Adressen ermöglicht, ohne Sicherheitsrisiken für den Provider. Die Technologie, weitere Identitäts-Codes mit der Hauptadresse in Verbindung zu bringen, erlaubt mail-Adressen mit beschränkter Gültigkeit, bis hin zu Einmal-Adressen. Dies verhindert Spam-Belästigung.

In einer anderen Ausführungsvariante werden Identitäts-Codes eines Benutzers als Fax- oder Telefon-Adressen genutzt und, bei einmaliger Verwendung, auf seinen Auftrag hin durch das Identitäten-Managementsystem zusammengeführt. Ein solches Verfahren hat insbesondere den Vorteil, dass die Verbindung einer Fax- oder Telefon-Nummer mit einem offen übermittelten Identitäts-Code mit längerer Gültigkeit die Möglichkeit ergibt, Fax- oder Tel-Nummer mittels weiteren Identitäts-Codes verdeckt an Dritte weiterzugeben, ohne sie zu offenbaren. Dies schützt den Benutzer vor Missbrauch.

In einer weiteren Ausführungsvariante werden Transaktionen oder Prozesse nach der Analyse von Identitäts-Codes durch das Identitäten-Managementsystem für den Benutzer freigegeben. Ein solches Verfahren hat insbesondere den Vorteil, dass es den teil- oder vollautomatischen Ablauf anonymer Prozesse von hoher Sicherheit ermöglicht, die im Identitäten-Managementsystem nach Vorgaben der Benutzer programmiert werden.

In einer anderen Ausführungsvariante wird basierend auf der Analyse von Identitäts-Codes eine anonyme Geldtransaktion zur Bezahlung von Dienstleistungen und/oder Gütern ausgelöst. Ein solches Verfahren hat insbesondere den Vorteil, dass für Benutzer, die über ein mit dem Identitäten-Managementsystem verbundenes Geld-Konto verfügen, anonyme aber sichere Geld-Transaktionen möglich sind.

In einer weiteren Ausführungsvariante werden basierend auf der Analyse von Identitäts-Codes hochsensible Personenmerkmale wie genetischer Code, biometrische Daten und/oder persönliche PKI-Schlüssel (PKI: Public Key Infrastructure) anonym abgespeichert. Ein solches Verfahren hat insbesondere den Vorteil, dass sowohl Benutzern als auch Dritten die sichere Ablage hochsensibler persönlicher Daten ermöglicht wird, ohne dass ein Bezug zur Person möglich ist, es sei denn, eine Zuordnung via einen durch die betroffene Person offen gelegten weiteren Identitäts-Code sei unter Einbezug des Identitäten-Managementsystems autorisiert oder die Identitäten-Zentrale werde zur Offenlegung rechtlich gezwungen. Diese Sicherheit ist bis jetzt nur durch Speicherung auf Smartcards möglich, die aber ein Verlustrisiko bergen.

In einer anderen Ausführungsvariante werden im Auftrag des Benutzers verschiedene Daten zusammen mit unterschiedlichen Identitäts-Codes des Benutzers unabhängig voneinander gespeichert und auf seine Weisung hin zusammengeführt. Ein solches Verfahren hat insbesondere den Vorteil, dass die Speicherung verschiedener Informationen eines Benutzers ermöglicht wird, ohne dass deren Zusammengehörigkeit feststellbar ist, es sei denn, der Benutzer erteile dem Identitäten-Managementsystem den Auftrag, die Daten (vorübergehend oder dauernd) zusammen zu fügen. Der Datenschutz kann damit auf eine höhere Ebene gebracht werden.

In einer weiteren Ausführungsvariante werden sensible Daten über einen Benutzer wie Gesundheitsdaten oder Steuerdaten in unabhängigen Datensätzen anonym abgespeichert, später aber im Auftrag einer dazu vom Benutzer autorisierten Stelle vom Identitäten-Managementsystem wieder zusammengeführt, wobei die Anonymität weiterhin erhalten bleibt. Ein solches Verfahren hat insbesondere den Vorteil, dass es Dritten ermöglicht wird, Daten eines Benutzers in voneinander unabhängigen Datensätzen zu speichern und sie - im Einverständnis mit dem Benutzer - durch das Identitäten-Managementsystem (vorübergehend oder dauernd) zusammen führen zu lassen, ohne dass die Anonymität aufgehoben wird. Dadurch werden z.B. wissenschaftliche Longitudinalstudien trotz eines Anonymisierungszwangs ermöglicht.

In einer anderen Ausführungsvariante werden auch komplexe Transaktionen mit mehreren Partnern durch Identitäts-Codes gesichert ermöglicht, autorisiert und/oder gesperrt, wobei die Prozesse für das Identitäten-Managementsystem definiert und von diesem umgesetzt werden. Ein solches Verfahren hat insbesondere den Vorteil, dass selbst komplexe Prozesse mit hohen Sicherheitsanforderungen durch ein einheitliches Identifizierungs- und/oder Authentifizierungsverfahren teil- oder vollautomatisch ermöglicht werden.

In einer weiteren Ausführungsvariante verändert das Identitäten-Generierungssystem bei einer Sicherheitsgefährdung die Basis-Codes und/oder das Verfahren zur Generierung von Identitäts-Codes aus Basis-Codes, wobei die damit verbundenen Veränderungen nachvollziehbar protokolliert werden. Ein solches Verfahren hat insbesondere den Vorteil, dass nicht nur eine Veränderung der Basis-Codes erfolgt sondern auch das Verfahren zur Generierung von Identitäts-Codes verändert werden kann, was eine zusätzliche Sicherheit bei krimineller Unterwanderung darstellt.

In einer anderen Ausführungsvariante macht das Identitäten-Managementsystem die aufgezeichneten Zugriffe, Identifizierungen, Authentifizierungen, Speicherungen, Abfragen und/oder Transaktionen dem betreffenden Kontoinhaber zugänglich. Ein solches Verfahren hat insbesondere den Vorteil, dass die Sicherheit und Glaubwürdigkeit des Gesamtsystems aus der Sicht des Benutzers erhöht wird und der persönliche Datenschutz optimiert wird.

In einer weiteren Ausführungsvariante wird das Generieren von Identitäts-Codes und/oder die Verwaltung dieses Prozesses als vergossene Hardware aus dem Identitäten-Generierungssystem ausgelagert. Ein solches Verfahren hat insbesondere den Vorteil, dass die Auslagerung eines Kern-Prozesses aus dem Gesamtsystem ermöglicht wird, ohne dass die Sicherheit eingeschränkt wird. Dadurch wird das Gesamtsystem entlastet und Grossverbrauchern unter den Benutzern die Handhabung des Systems erleichtert.

In einer anderen Ausführungsvariante wird ein unabhängiges computerbasiertes System aufgebaut, ohne dass Verwechslungen oder Einschränkung der Eindeutigkeit entstehen. Ein solches Verfahren hat insbesondere den Vorteil, dass die Multiplikation des Gesamtsystems an dezentralen, voneinander unabhängigen, nicht miteinander vernetzten Standorten ermöglicht wird, ohne dass die Eindeutigkeit von Identitäts-Codes verloren geht. Dazu braucht es eine zentrale Dachorganisation zur Führung der dezentralen Identitäten-Zentralen.

In einer weiteren Ausführungsvariante wird ein unabhängiges chipbasiertes System aufgebaut, ohne dass Verwechslungen oder Einschränkungen der Eindeutigkeit entstehen. Ein solches Verfahren hat insbesondere den Vorteil, dass die Miniaturisierung von Teilen des Gesamtsystems (ohne Identitäten-Zentrale) in vergossener Chip-Form ermöglicht wird, was eine unvernetzte, lokale und autonome Anwendung erlaubt, ohne die Eindeutigkeit der Identitäts-Codes zu gefährden.

### Kurze Beschreibung von Zeichnungen

Nachfolgend werden Ausführungsvarianten der vorliegenden Erfindung anhand von Beispielen beschrieben. Die Beispiele der Ausführungen werden durch folgende beigelegte Figuren illustriert:
Fig. 1 Gesamtsystem - Übersicht
Fig. 2 Vorbereitende Massnahmen
Fig. 3 Initialisierung
Fig. 4 Generierung weiterer Identitäts-Codes
Fig. 5 Validierung von Identitäts-Codes: Gültigkeitsabklärung
Fig. 6 Validierung von Identitäts-Codes: Identifizierung
Fig. 7 Validierung von Identitäts-Codes: Authentifzierung

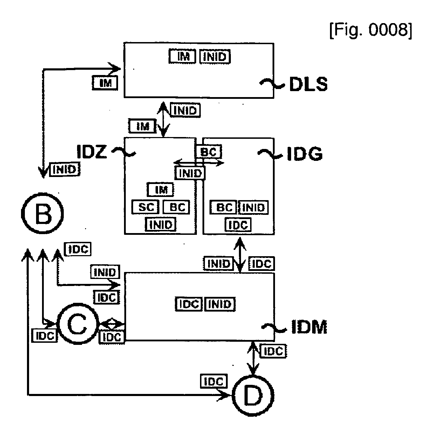

Fig. 8 Illustration der Zusammenfassung

Systemarchitektur und Teilsysteme

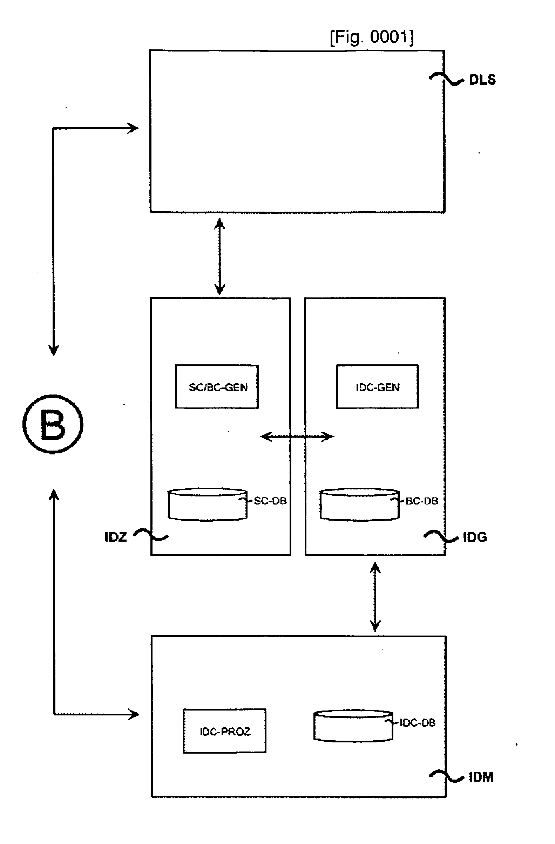

Das Gesamtsystem umfasst wie in Figur 1 gezeichnet die 3 Teilsysteme Identitäten-Zentrale IDZ, Identitäten-Generierungssystem IDG und Identitäten-Managementsystem IDM. Die Teilsysteme sind physisch voneinander getrennt und über ein Datennetzwerk miteinander verbunden. Die Identitäten-Zentrale IDZ verfügt über eine Internet-Schnittstelle zur Kommunikation mit einem oder mehreren Dienstleistungssystemen DLS, das Identitäten-Managementsystem IDM eine solche zur Kommunikation mit Benutzern und Dritten. Die Kommunikation über Internet erfolgt geschützt beispielsweise über SSL (SSL: Secure Socket Layer).

Wie in Figur 1 gezeichnet ist die Identitäten-Zentrale IDZ das Gehirn des Gesamtsystems. Sie legt die Verfahren zur Produktion und Anwendung von Stamm-Codes, Basis-Codes und Identitäts-Codes fest und ist die Schnittstelle des Gesamtsystems nach aussen für alle nicht-anonymen Kontakte, insbesondere derjenigen zu Dienstleistungssystemen DLS. Bei einer Skalierung des Gesamtsystems ist es möglich, für die letztere Funktion Sub-Zentralen vor Ort zu bilden, die der Identitäten-Zentrale IDZ unterstellt sind. Die Identitäten-Zentrale IDZ verfügt über eine Datenbank SC-DB, in der die Stamm-Codes SC mit den zugehörigen Informationen wie Identifikations-Merkmal IM, DLS-Merkmal M, Basis-Code(s) BC, Initialisierungs-Codes INID und Anzahl generierter Identitäts-Codes IDC gespeichert sind. Sie ist stark geschützt und verfügt über keine direkte Schnittstelle nach aussen. Ferner beinhaltet die Identitäten-Zentrale IDZ einen Prozessor SC/BC-GEN zur Generierung und Zwischenspeicherung von Stamm-Codes SC und Basis-Codes BC.

Das Identitäten-Generierungssystem IDG ist wie in Figur 1 dargestellt die stark geschützte Produktionsstätte des Gesamtsystems. Es produziert nach einem geheimen und durch die Identitäten-Zentrale IDZ festgelegten Verfahren aus Basis-Codes BC nicht sprechende Identitäts-Codes IDC, die reversibel sind, das heisst, die in Kenntnis des Umkehrverfahrens auf den Basis-Code BC zurückgeführt werden können. Das Identitäten-Generierungssystem IDG verfügt über einen Prozessor IDC-GEN zur Generierung der Initialisierungs-Codes INID und Identitäts-Codes IDC, eine Datenbank BC-DB zur Speicherung der Basis-Codes BC und ihren zugeordneten Initialisierungs-Codes INID und Identitäts-Codes IDC, die alle eindeutig sind, das heisst nur einmal vorkommen, sowie interne Schnittstellen zur Identitäten-Zentrale IDZ und zum Identitäten-Managementsystem IDM. Beispiele zur Produktion von nicht sprechenden Identitäts-Codes umfassen Zufallszahlen, Zufallszeichen, Zufallsbuchstaben oder aus Zufallszahlen generierte Zeichen- und/oder Buchstabenfolgen.

Das Identitäten-Managementsystem IDM ist wie in Figur 1 dargestellt das Verwaltungszentrum des Gesamtsystems und dessen Schnittstelle nach aussen für alle anonymen Kontakte. Es verfügt über eine stark geschützte Datenbank IDC-DB, in der zu den Initialisierungs-Codes INID zugeordnete Identitäts-Codes IDC und deren Gültigkeit und Verwendung gespeichert und die Konti der Benutzer verwaltet werden. Sie hat keine direkte Schnittstelle nach aussen. Ferner beinhaltet das Identitäten-Managementsystem IDM einen Prozessor IDC-PROZ, der Internet-Schnittstellen zum Benutzer B und Dritten für den anonymen Austausch von Informationen aufweist, Identitäts-Codes IDC oder Codes-Kombinationen validiert und das Ergebnis rückmeldet respektive vordefinierte Prozesse auslöst. Das Identitäten-Managementsystem IDM hat interne Schnittstellen zur Identitäten-Zentrale IDZ und zum Identitäten-Generierungssystem IDG.

Bei einer Skalierung des Gesamtsystems ist es möglich, mehrere Identitäten-Managementsysteme IDM und/oder Identitäten-Generierungssysteme IDG unter der zentralen Führung der Identitäten-Zentrale IDZ resp. deren Sub-Zentralen zu betreiben.

System-Funktion

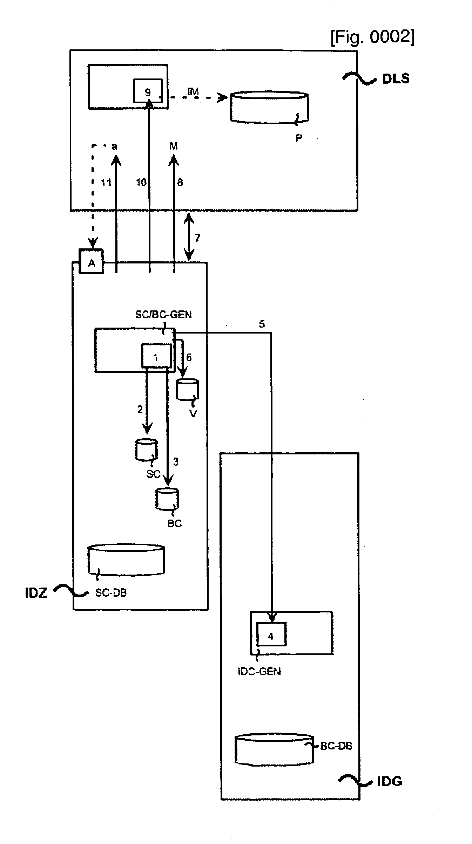

Vorbereitende Massnahmen gemäss Figur 2

Die Identitäten-Zentrale IDZ legt im Schritt 1 das Format der aus Zufallszahlen generierten Stamm-Codes und Basis-Codes fest, produziert in den Schritten 2,3 eine erste Serie im Prozessor und speichert sie ab.

Die Identitäten-Zentrale IDZ legt das Verfahren fest, nach dem das Identitäten-Generierungssystem IDG im Schritt 4 die Identitäts-Codes zu produzieren hat, programmiert dessen Prozessor im Schritt 5 entsprechend und speichert im Schritt 6 das Protokoll.

Die Identitäten-Zentrale IDZ schliesst im Schritt 7 einen Vertrag mit einem Dienstleistungssystem DLS, weist ihm im Schritt 8 ein eindeutiges Merkmal M zu und bestimmt im Schritt 9 Art und Format des eindeutigen, nicht sprechenden Identifikations-Merkmals IM von Benutzern, das das Dienstleistungssystem DLS im Rahmen des standardisierten Authentifizierungsverfahrens zu erheben und mit weiteren Personalien P zu speichern hat, die es ihm erlauben, jederzeit mit dem Benutzer in persönlichen Kontakt zu treten. Das Dienstleistungssystem DLS erhält im Schritt 11 eine Zugangsadresse A und Login-Informationen a zur gesicherten Verbindungsaufnahme mit der Identitäten-Zentrale IDZ.

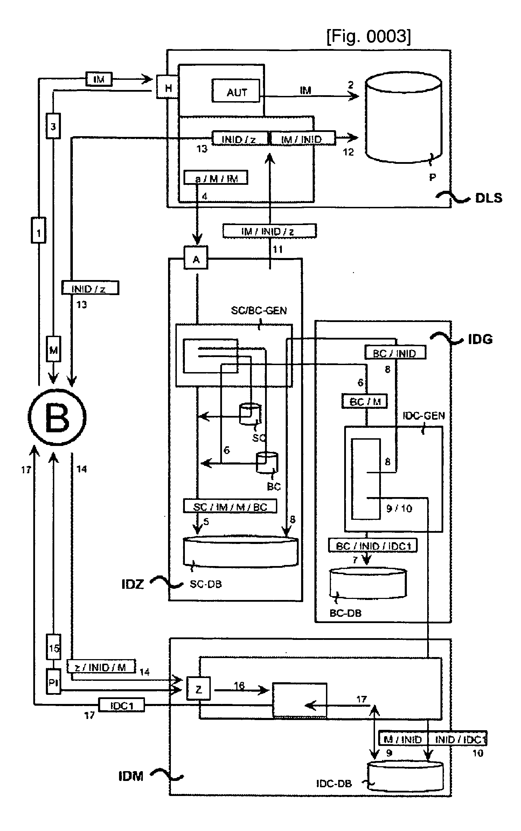

Initialisierung gemäss Figur 3

Der Initialisierungsprozess startet extern im Dienstleistungssystem DLS, wo über eine Human-Schnittstelle H im Schritt 1 die Authentifizierung des Benutzers B stattfindet oder, bei früher erfolgter Authentifizierung, im Schritt 2 ergänzende Informationen, v.a. das IM, eingeholt und gespeichert werden. Dabei erhält B im Schritt 3 das Merkmal M des Dienstleistungssystems DLS.

Das Dienstleistungssystem DLS übermittelt SSL-gesichert via Internet das IM im Schritt 4 an die Identitäten-Zentrale IDZ, wo es, zusammen mit M, einem Stamm-Code SC und einem Basis-Code BC, im Schritt 5 abgespeichert wird.

Die Identitäten-Zentrale IDZ übermittelt im Schritt 6 den Basis-Code BC an das Identitäten-Generierungssystem IDG und löst damit die Produktion einer 1. Serie von Identitäts-Codes für den Benutzer B aus, die im Identitäten-Generierungssystem IDG gemäss Schritt 7 gespeichert und gesperrt werden.

Das Identitäten-Generierungssystem IDG definiert nach Vorgabe des Identitäten-Zentrale IDZ einen Teil dieser 1. Serie als Inititalisierungs-Codes INID und übermittelt diese, zusammen mit dem BC, an die Identitäten-Zentrale IDZ, wo sie im Schritt 8 zum zugehörigen Datensatz hinzugefügt werden. Die Initialisierungs-Codes INID und das DLS-Merkmal M werden an das Identitäten-Managementsystem IDM übermittelt und dort im Schritt 9 gespeichert.

Das Identitäten-Generierungssystem IDG übermittelt die Initialisierungs-Codes INID und übrigen Identitäts-Codes ID der 1. Serie an das Identitäten-Managementsystem IDM, wo Letztere mittels den Initialisierungs-Codes INID als Identifikatoren im Schritt 10 zum bestehenden zugeordneten Datensatz hinzugefügt werden.

Die Identitäten-Zentrale IDZ übermittelt die Initialisierungs-Codes INID, zusammen mit dem Identifikations-Merkmal IM und einem Login z zur Zugangsadresse Z zum Identitäten-Managementsystem IDM, via Internet SSL-gesichert gemäss Schritt 11 an das Dienstleistungssystem DLS, das die Initialisierungs-Codes INID im Schritt 12 speichert und, zusammen mit dem Login z an den Benutzer B gemäss Schritt 13 übermittelt.

Der Benutzer B meldet sich gemäss Schritt 14 via Internet SSL-gesichert anonym über mit dem Login z über die Zugangsadresse Z beim Identitäten-Managementsystem IDM an, verwendet einen Initialisierungs-Code INID als Login, und das DLS-Merkmal M sowie einen weiteren Initialisierungs-Code INID als Pass-Information.

Das Identitäten-Managementsystem IDM überprüft Vorhandensein und Übereinstimmung dieser Informationen in seiner Datenbank und gibt den Prozess zur Kontoeröffnung frei.

Die Kontoeröffnung beinhaltet gemäss Schritt 15 die Definition eines Sets von Pass-Informationen, in Form von Antworten auf Fragen, die das Identitäten-Managementsystem IDM vorgibt und/oder der Benutzer B selber definieren kann und Dritten nicht bekannt sind.

Nach erfolgter Kontoeröffnung gemäss Schritt 16 kann B die noch nicht übermittelten Identitäts-Codes IDC der 1. Serie einsehen oder gemäss Schritt 17 herunterladen.

In seinem Konto kann der Benutzer B ferner mindestens folgende Funktionen ausüben:
- Sperren von Identitäts-Codes IDC
- Ändern eines Identitäts-Codes IDC von einem Einmal-Code in einen Code mit bestimmter Gültigkeit
- Definieren von Kombinationen von eigenen und fremden Identitäts-Codes IDC mit bestimmter Gültigkeit
- Ändern von Pass-Informationen PI
- Bestellen weiterer Identitäts-Codes IDC
- Abfragen von Protokollen
- Einstellungen zur Kommunikation von Validierungen und Autorisierungen
- Sperren des Kontos (Entsperrung nur via Dienstleistungssystem DLS und Identitäten-Zentrale IDZ möglich)

Als Login in sein Konto braucht der Benutzer B einen gültigen Identitäts-Code IDC und eine korrekte Antwort auf eine vom Identitäten-Managementsystem IDM zufällig ausgewählte Frage aus den Pass-Informationen PI.

Mit dem Ausloggen aus dem Konto schliesst B den Initialisierungs-Prozess ab.

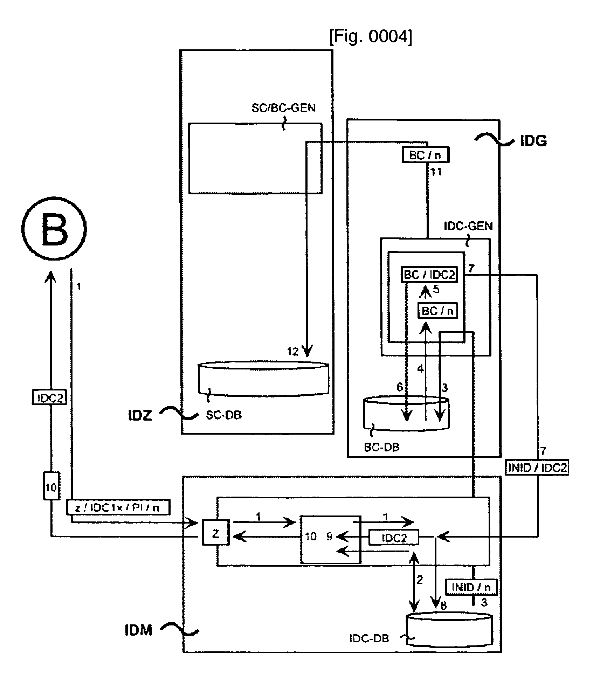

Generierung weiterer Identitäts-Codes gemäss Figur 4

Der Benutzer B kann aus seinem Konto heraus im Schritt 1 die Generierung weiterer Identitäts-Codes IDC auslösen.

Die Bestellung wird vom Identitäten-Managementsystem IDM unter Angabe eines Initialisierungs-Codes INID und der definierten Anzahl n im Schritt 2,3 an das Identitäten-Generierungssystem IDG übermittelt.

Das Identitäten-Generierungssystem IDG ermittelt im Schritt 4 aus dem Initialisierungs-Code INID den zugehörigen Datensatz und generiert im Schritt 5 aus dem entsprechenden Basis-Code BC die bestellte Anzahl Identitäts-Codes IDC unter Ausschluss gesperrter IDC. Die generierten Identitäts-Codes IDC werden im Schritt 6 gespeichert, gesperrt und im Schritt 7 an das Identitäten-Managementsystem IDM übermittelt, wo sie im Schritt 8,9 zum Datensatz des Benutzers B hinzugefügt werden und im Schritt 10 von diesem in seinem Konto abgeholt werden können.

Die Anzahl generierter Identitäts-Codes IDC wird vom Identitäten-Generierungssystem IDG, zusammen mit dem Basis-Code BC, im Schritt 11 an die Identitäten-Zentrale IDZ übermittelt und im Schritt 12 dort gespeichert.

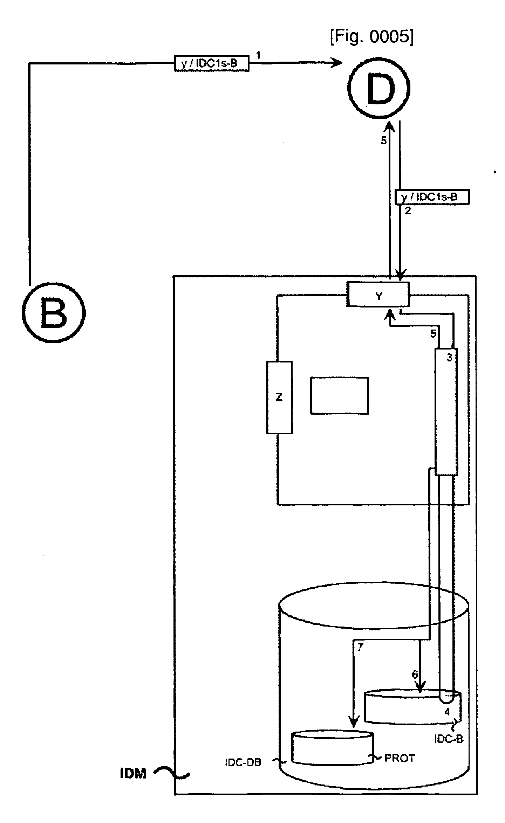

Validierung von Identitäts-Codes gemäss Figur 5, Figur 6 und Figur 7

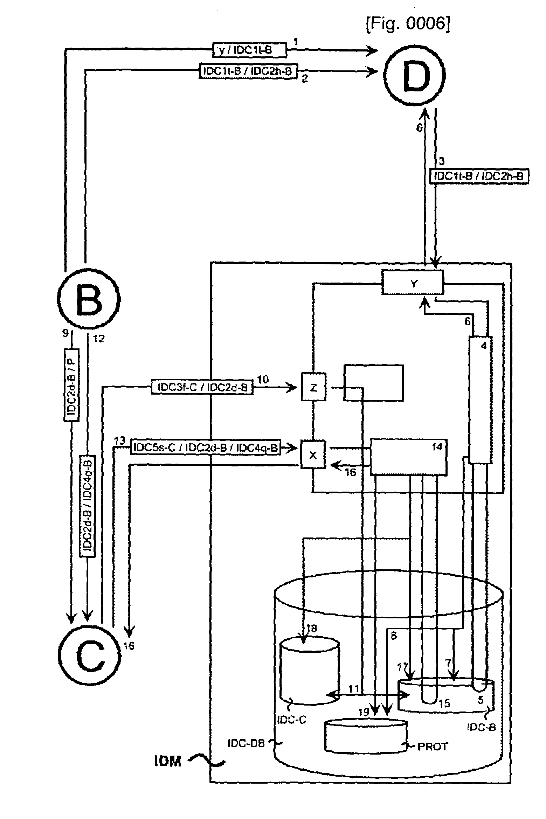

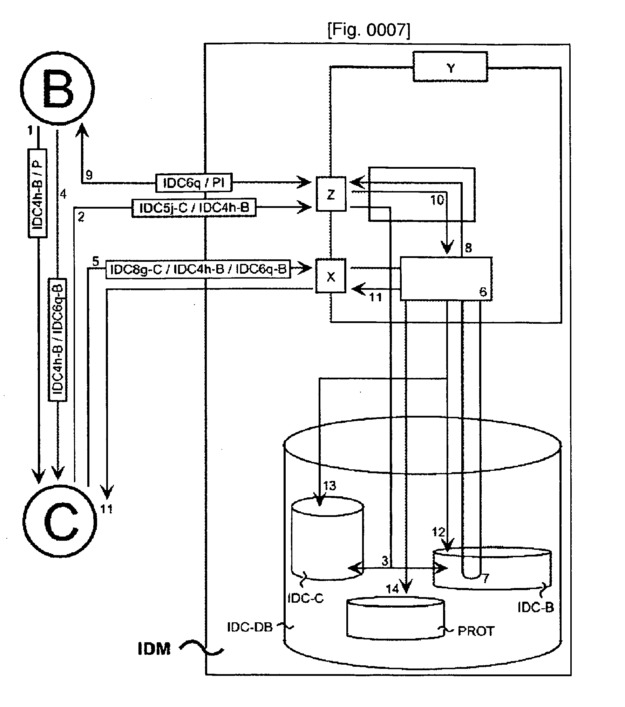

Das Identitäten-Managementsystem IDM ermöglicht auf seiner Web-Seite verschiedene Validierungs-Möglichkeiten:
- Gültigkeits-Bestätigung gemäss Figur 5: Über eine öffentlich zugängliche Schnittstelle Y kann auch von Dritten C, die nicht dem System angehören, ein Identifikations-Code IDC eingegeben werden, der zuvor im Schritt 1,2 vom Benutzer B übermittelt worden ist. Dieser wird im Identitäten-Managementsystem IDM im Schritt 3,4,6 auf Gültigkeit geprüft und gesperrt. Die Abfrage wird im Schritt 7 protokolliert und das Resultat der Validierung als "gültig" oder "ungültig" dem Anfragenden C im Schritt 5 auf der Web-Seite bekannt gegeben. Der Dialog ist SSL-geschützt.
- Identifizierung gemäss Figur 6: Nach Bedarf können zwei oder drei IdentifikationsCodes IDC eingegeben werden. Werden durch Benutzer B oder C oder Dritte D zwei Identitäts-Codes IDC des Benutzers B eingegeben, die ihnen dieser im Schritt 1,2,3 vorher übermittelt hat, werden diese durch das Identitäten-Managementsystem IDM im Schritt 4,5,7 auf Zugehörigkeit zum Benutzer B überprüft und gesperrt. Die Abfrage wird im Schritt 8 protokolliert und das Resultat der Validerung als "identifiziert" oder "nicht identifiziert" dem Anfragenden bekannt gegeben oder in einen vordefinierten Prozess eingegeben, der bei "identifiziert" zu einer Autorisierung führt und im Schritt 6 ebenfalls protokolliert wird. Werden durch weitere Benutzer C oder den Benutzer B im Schritt 13 drei Identitäts-Codes IDC eingegeben (2 von B, 1 von C respektive 1 von B, 2 von C) überprüft das Identitäten-Managementsystem IDM, ob im Konto von B oder C die Verknüpfung der beiden Benutzer definiert worden ist und ob gemäss Schritt 9,10,11,12,14,15 der dritte Identitäts-Code IDC entweder B oder C gehört. Der dritte Identitäts-Code IDC wird im Schritt 17,18 gesperrt, die Abfrage im Schritt 19 protokolliert und das Resultat der Validierung als "identifiziert" oder "nicht identifiziert" dem Anfragenden bekannt gegeben oder in einen vordefinierten Prozess eingegeben, der bei "identifiziert" zur einer Autorisierung führt und im Schritt 16 ebenfalls protokolliert wird. Die erfolgte Abfrage wird sowohl B und C auf die von diesen in ihrem Konto festgelegte Weise aktiv kommuniziert.
- Authentifizierung gemäss Figur 7: siehe "Identifizierung" mit dem Unterschied, dass der Benutzer B der 2 eingegebenen Identitäts-Codes IDC zusätzlich eine Pass-Frage PI richtig beantworten muss. Die Validierungsantwort lautet entsprechend "authentifiziert" oder "nicht authentifiziert". ,

## Patentansprüche

1. Computer basiertes Verfahren zur anonymen Analyse authentifizierender Identitäts-Codes (IDC) eines Benutzers (B) oder eines Objekts, **dadurch gekennzeichnet,**
**dass** durch eine Identitäten-Zentrale (IDZ) ein Identifikations-Merkmal (IM) bestimmt wird,
**dass** nach einer Authentifizierung des Benutzers (B) oder eines Vertreters des Objekts das Identifikations-Merkmal (IM) in einem Dienstleistungssystem (DLS) den Stammdaten des Benutzers (B) oder des Objekts zugeordnet abgespeichert wird,
**dass** das Identifikations-Merkmal (IM) und ein Merkmal (M) des Dienstleistungssystems (DLS) an die Identitäten-Zentrale (IDZ) übermittelt werden und dort zusammen mit einem geheimen Stamm-Code (SC) und einem unabhängigen Basis-Code (BC) abgespeichert werden,
**dass** die Identitäten-Zentrale (IDZ) die Gültigkeit eines oder mehrerer Basis-Codes (BC) festlegt und diese bei Bedarf wechseln kann, wobei die eindeutige Zuordnung zu den Stamm-Codes (SC) erhalten bleibt,
**dass** der Basis-Code (BC) von der Identitäten-Zentrale (IDZ) an ein Identitäten-Generierungssystem (IDG) übermittelt wird,
**dass** mittels eines festlegbaren Verfahrens dem Basis-Code (BC) eindeutig zugeordnete Identitäts-Codes (IDC) erzeugt werden,
**dass** das Identitäten-Generierungssystem (IDG) die erzeugten Identitäts-Codes (IDC) sperrt,
**dass** die erzeugten Identitäts-Codes (IDC) an ein Identitäten-Managementsystem (IDM) übermittelt werden,
**dass** aus den erzeugten Identitäts-Codes (IDC) für den Initialisierungsprozess einmalig Initialisierungs-Codes (INID) bestimmt und in der Identitäten-Zentrale (IDZ) abgespeichert werden,
**dass** die Initialisierungs-Codes (INID) zusammen mit dem Identifikations-Merkmal (IM) und einer Zugangs-Adresse des Identitäten-Managementsystems (IDM) an das Dienstleistungssystem (DLS) übermittelt werden,
**dass** durch das Identitäten-Managementsystem über die Zugangsadresse des Identitäten-Managementsystems (IDM) Initialisierungs-Codes (INID) und geheime Pass-Informationen empfangen werden, wobei ein Benutzerkonto zur Erzeugung von weiteren Identitäts-Codes (IDC) konfiguriert wird,
**dass** durch das Identitäten-Managementsystem (IDM) ein Identitäts-Code (IDC) empfangen und analysiert wird.

2. Verfahren nach Anspruch 1, **dadurch gekennzeichnet, dass** mehrere Identitäts-Codes (IDC) eines oder mehrerer Benutzer oder Objekte kombiniert analysiert werden.

3. Verfahren nach einem der Ansprüche 1 bis 2, **dadurch gekennzeichnet, dass** die Analyse eines Identitäts-Codes (IDC) zusammen mit einer Abfrage von Pass-Informationen durchgeführt wird.

4. Verfahren nach einem der Ansprüche 1 bis 3, **dadurch gekennzeichnet, dass** die Übermittlung des Identifikations-Merkmals (IM) an die Identitäten-Zentrale (IDZ) durch den Benutzer oder Vertreter des Objekts freigegeben wird.

5. Verfahren nach einem der Ansprüche 1 bis 4, **dadurch gekennzeichnet, dass** die Stammdaten des Benutzers im Dienstleistungssystem (DLS) vom Dienstleistungssystem (DLS) zu bestimmten, vom Identitäten-Generierungssystem (IDG) festgelegten, Zeitpunkten überprüft und nachgeführt werden.

6. Verfahren nach einem der Ansprüche 1 bis 5, **dadurch gekennzeichnet, dass** die Übermittlung von Daten zwischen dem Dienstleistungssystem (DLS), dem Identitäten-Generierungssystem (IDG) und/oder dem Identitäten-Managementsystem (IDM) mittels mindestens eines Datennetzwerks und/oder Telekommunikationsnetzwerks erfolgt.

7. Verfahren nach einem der Ansprüche 1 bis 6, **dadurch gekennzeichnet, dass** die vom Identitäten-Managementsystem (IDM) angeforderten Pass-Informationen Antworten auf vom Identitäten-Managementsystem (IDM) gestellte Fragen und/oder Daten sind, die von Geräten, wie Tokens, Smartcards oder Mobilephones gesendet werden.

8. Verfahren nach einem der Ansprüche 1 bis 7, **dadurch gekennzeichnet, dass** das Identitäten-Managementsystem (IDM) auf Anforderung des Benutzers im Rahmen der Konto-Verwaltung beim Identitäten-Generierungssystem (IDG) weitere Identitäten bestellt, die dort nach dem beschriebenen Verfahren hergestellt, gesperrt, an das Identitäten-Managementsystem (IDM) übermittelt und dort dem Benutzer nach Bedarf übermittelt werden.

9. Verfahren nach einem der Ansprüche 1 bis 8, **dadurch gekennzeichnet, dass** die Konto-Verwaltung dem Benutzer neben der Anforderung neuer Identitäts-Codes (IDC) weitere Funktionen zur Verfügung stellt, wie Verwaltung einer Datenbank, Abändern der Gültigkeit, Sperren, Anbinden an Fremd-Identitäten, Verbindung mit einem Bankkonto, Kopplung mit definierten Transaktionen und/oder Wechsel der Pass-Informationen.

10. Verfahren nach einem der Ansprüche 1 bis 9, **dadurch gekennzeichnet, dass** der Benutzer einzelne seiner Identitäts-Codes (IDC) unter Festlegung ihrer Gültigkeit offen oder anonym an Dritte übermittelt und **dadurch** die Voraussetzung schafft, dass diese ihn einzig auf Grund einer weiteren übermittelten Identität durch das Identitäten-Managementsystem (IDM) identifizieren und/oder unter Einschaltung der Passinformations-Abfrage authentifizieren lassen können.

11. Verfahren nach einem der Ansprüche 1 bis 10, **dadurch gekennzeichnet, dass** Identifizierungen über den Vergleich zweier Identitäts-Codes (IDC) durch das Identitäten-Managementsystem (IDM) erfolgen, dem dazu autorisierten Anfragenden das Resultat der Überprüfung übermittelt wird und eine zusätzliche Authentifizierung der Identität durch die Zwischenschaltung einer Pass-Informations-Abfrage ergänzt werden kann.

12. Verfahren nach einem der Ansprüche 1 bis 11, **dadurch gekennzeichnet, dass** dem Identitäten-Managementsystem (IDM) durch den Benutzer oder Vertreter eines Objekts Kombinationen von Identitäts-Codes (IDC) unterschiedlicher Benutzer oder Objekte zur Speicherung übermittelt werden, die von diesem dazu verwendet werden, künftige Transaktionen mit andern Identitäts-Codes (IDC) derselben Partner zu steuern und/oder zu beurteilen.

13. Verfahren nach einem der Ansprüche 1 bis 12, **dadurch gekennzeichnet, dass** Identitäts-Codes (IDC) eines Benutzers als e-mail-Adressen genutzt werden und, bei einmaliger Verwendung, auf seinen Auftrag hin durch das Identitäten-Managementsystem (IDM) zusammengeführt werden.

14. Verfahren nach einem der Ansprüche 1 bis 13, **dadurch gekennzeichnet, dass** Identitäts-Codes (IDC) eines Benutzers als Fax- und/oder Telefon-Adressen genutzt werden und, bei einmaliger Verwendung, auf seinen Auftrag hin durch das Identitäten-Managementsystem (IDM) zusammengeführt werden.

15. Verfahren nach einem der Ansprüche 1 bis 14, **dadurch gekennzeichnet, dass** Transaktionen oder Prozesse nach der Analyse von Identitäts-Codes (IDC) durch das Identitäten-Managementsystem (IDM) für den Benutzer freigegeben werden.

16. Verfahren nach einem der Ansprüche 1 bis 15, **dadurch gekennzeichnet, dass** basierend auf der Analyse von Identitäts-Codes (IDC) eine anonyme Geldtransaktion zur Bezahlung von Dienstleistungen und/oder Gütern ausgelöst wird.

17. Verfahren nach einem der Ansprüche 1 bis 16, **dadurch gekennzeichnet, dass** basierend auf der Analyse von Identitäts-Codes (IDC) hochsensible Personenmerkmale wie genetischer Code, biometrische Daten und/oder persönliche PKI-Schlüssel anonym abgespeichert werden.

18. Verfahren nach einem der Ansprüche 1 bis 17, **dadurch gekennzeichnet, dass** im Auftrag des Benutzers verschiedene Daten zusammen mit unterschiedlichen Identitäts-Codes (IDC) des Benutzers unabhängig voneinander gespeichert und auf seine Weisung hin zusammengeführt werden.

19. Verfahren nach einem der Ansprüche 1 bis 18, **dadurch gekennzeichnet, dass** sensible Daten über einen Benutzer wie Gesundheitsdaten oder Steuerdaten in unabhängigen Datensätzen anonym abgespeichert werden, später aber im Auftrag einer dazu vom Benutzer autorisierten Stelle vom Identitäten-Managementsystem (IDM) wieder zusammengeführt werden, wobei die Anonymität weiterhin erhalten bleibt.

20. Verfahren nach einem der Ansprüche 1 bis 19, **dadurch gekennzeichnet, dass** auch komplexe Transaktionen mit mehreren Partnern durch Identitäts-Codes (IDC) gesichert ermöglicht, autorisiert und/oder gesperrt werden, wobei die Prozesse für das Identitäten-Managementsystem (IDM) definiert und von diesem umgesetzt werden.

21. Verfahren nach einem der Ansprüche 1 bis 20, **dadurch gekennzeichnet, dass** bei einer Sicherheitsgefährdung das Identitäten-Generierungssystem (IDG) die Basis-Codes (BC) und/oder das Verfahren zur Generierung von Identitäts-Codes (IDC) aus Basis-Codes verändert, wobei die damit verbundenen Veränderungen nachvollziehbar protokolliert werden.

22. Verfahren nach einem der Ansprüche 1 bis 21, **dadurch gekennzeichnet, dass** das Identitäten-Managementsystem (IDM) die aufgezeichneten Zugriffe, Identifizierungen, Authentifizierungen, Speicherungen, Abfragen und/oder Transaktionen dem betreffenden Kontoinhaber zugänglich macht.

23. Verfahren nach einem der Ansprüche 1 bis 22, **dadurch gekennzeichnet, dass** das Generieren von Identitäts-Codes (IDC) und/oder die Verwaltung dieses Prozesses als vergossene Hardware aus dem Identitäten-Generierungssystem ausgelagert wird.

24. Verfahren nach einem der Ansprüche 1 bis 23, **dadurch gekennzeichnet, dass** ein zentral gesteuertes dezentrales computerbasiertes Gesamtsystem aufgebaut wird, ohne dass Verwechslungen oder Einschränkung der Eindeutigkeit entstehen.

25. Verfahren nach einem der Ansprüche 1 bis 24, **dadurch gekennzeichnet, dass** ein zentral gesteuertes dezentrales chipbasiertes Teilsystem aufgebaut wird, ohne dass Verwechslungen oder Einschränkungen der Eindeutigkeit entstehen.

## Claims

1. Method for anonymous analysis of authenticating identity codes (IDC) of a user (B) or of an object, **characterised in that** an identification feature (IM) is selected by an identity centre, **in that** after an authentication of the user (B) or of a representative of the object, the identification feature (IM) is stored in a service system (DLS) assigned to the master file data of the user (B) or of the object,
**in that** the identification feature (IM) and a feature (M) of the service system (DLS) are transmitted to the identity centre and are stored there together with a secret master code (SC) and an independent base code (BC),
**in that** the identity centre determines the validity of one or more base codes (BC) and can change these, when needed, the unambiguous assignment to the master codes (SC) being preserved,
**in that** the base code (BC) is transmitted from the identity centre to an identity code generating system (IDG),
**in that**, by means of a method able to be determined, identity codes (IDC) assigned in an unambiguous way to the base code (BC) are generated,
**in that** the identity code generating system (IDG) blocks the generated identity codes (IDC),
**in that** the generated identity codes (IDC) are transmitted to an identity management system (IDM),
**in that** for the initialization process initialization codes (INID) are determined once from the generated identity codes (IDC), and are stored in the identity centre,
**in that** the initialization codes (INID) are transmitted to the service system (DLS) together with the identification feature (IM) and an access address of the identity management system (IDM),
**in that** through the identity management system, by way of the access address of the identity management system (IDM), initialization codes (INID) and secret pass data are received, a user account being configured for generation of further identity codes (IDC),
**in that** an identity code (IDC) is received and analysed by the identity management system (IDM).

2. Method according to claim 1, **characterised in that** a multiplicity of identity codes (IDC) of one or more users or objects are analysed in a combined way.

3. Method according to one of the claims 1 to 2, **characterised in that** the analysis of an identity code (IDC) is carried out together with a retrieval of pass data.

4. Method according to one of the claims 1 to 3, **characterised in that** the transmission of the identification feature (IM) to the identity centre (IDZ) is released by the user or representative of the object.

5. Method according to one of the claims 1 to 4, **characterised in that** the master file data of the user is checked and updated in the service system (DLS) by the service system (DLS) at certain times defined by the identity code generating system (IDG).

6. Method according to one of the claims 1 to 5, **characterised in that** the transmission of data between the service system (DLS), the identity code generating system (IDG) and/or the identity management system (IDM) takes place by means of at least one data network and/or telecommunications network.

7. Method according to one of the claims 1 to 6, **characterised in that** the pass data requested from the identity management system (IDM) are answers to questions posed by the identity management system (IDM) and/or are data which are transmitted by devices such as tokens, smart cards or mobile phones.

8. Method according to one of the claims 1 to 7, **characterised in that**, upon request of the user, in the context of the account administration, the identity management system (IDM) orders further identities from the identity code generating system (IDG), which identity codes are produced there according to the described method, are disabled, are transmitted to the identity management system (IDM) and are transmitted there to the user according to need.

9. Method according to one of the claims 1 to 8, **characterised in that**, in addition to the request for new identity codes (IDC), the account administration makes further functions available to the user, such as administration of a database, change of validity, blocking, linking to foreign identity codes, connection to a bank account, linking with defined transactions and/or change of the pass data.

10. Method according to one of the claims 1 to 9, **characterised in that** the user transmits openly or anonymously to third parties some of his identity codes (IDC) with definition of their validity and thereby sets the precondition that these identity codes are able to identify him only based on a further transmitted identity code by the identity management system (IDM) and/or with activation of the pass data query.

11. Method according to one of the claims 1 to 10, **characterised in that** identification is carried out by way of comparison of two identity codes (IDC) by the identity management system (IDM), the result of the check is transmitted to the querying party authorized for this purpose, and an additional authentication of the identity is able to be supplemented by the interposition of a pass-information query.

12. Method according to one of the claims 1 to 11, **characterised in that** transmitted to the identity management system (IDM) by the user or representative of an object are combinations of identity codes (IDC) of different users or objects for storage, which are used by these users or objects to control and/or to assess future transactions with other identity codes (IDC) of the same partner.

13. Method according to one of the claims 1 to 12, **characterised in that** identity codes (IDC) of a user are used as e-mail addresses, and, with one-time use, are brought together by the identity management system (IDM), upon request of the user.

14. Method according to one of the claims 1 to 13, **characterised in that** identity codes (IDC) of a user are used as fax and/or telephone addresses and, with one-time use, are put together by the identity management system (IDM) upon request of the user.

15. Method according to one of the claims 1 to 14, **characterised in that**, after the analysis of identity codes (IDC), transactions or processes are cleared for the user by the identity management system (IDM).

16. Method according to one of the claims 1 to 15, **characterised in that**, based on the analysis of identity codes (IDC), an anonymous monetary transaction is triggered for payment of services and/or goods.

17. Method according to one of the claims 1 to 16, **characterised in that**, based on the analysis of identity codes (IDC), highly sensitive personal features such as genetic codes, biometrical data and/or personal PKI keys are stored anonymously.

18. Method according to one of the claims 1 to 17, **characterised in that**, on behalf of the user, different data are stored separately from one another, together with different identity codes (IDC) of the user, and are put together upon his request.

19. Method according to one of the claims 1 to 18, **characterised in that** sensitive data about a user such as health data or tax data are stored anonymously in independent data sets, but later, on behalf of a point authorized therefor by the user, are put together again by the identity management system (IDM), the anonymity continuing to be preserved.

20. Method according to one of the claims 1 to 19, **characterised in that** also complex transactions with a multiplicity of partners, secured by identity codes (IDC), are made possible, are authorized and/or are blocked, the processes for the identity management system (IDM) being defined and implemented thereby.

21. Method according to one of the claims 1 to 20, **characterised in that**, in the case of a threat to security, the identity code generating system (IDG) changes the base codes (BC) and/or the method of generating identity codes (IDC) from base codes, the changes connected therewith being recorded in a reproducible way.

22. Method according to one of the claims 1 to 21, **characterised in that** the identity management system (IDM) makes the recorded instances of access, identification, authentication, storing, querying and/or transactions accessible to the respective account holder.

23. Method according to one of the claims 1 to 22, **characterised in that** the generation of identity codes (IDC) and/or the management of this process is outsourced from the identity code generating system as sealed hardware.

24. Method according to one of the claims 1 to 23, **characterised in that** a centrally controlled, decentralized computer-based complete system is set up without mix-ups or limitations of clarity arising.

25. Method according to one of the claims 1 to 24, **characterised in that** a centrally controlled, decentralized chip-based sub-system is set up without any mix-ups or limitations of clarity arising.

## Revendications

1. Procédé pour l'analyse anonyme de code d'identité d'authentification (IDC) d'un utilisateur (B) ou d'un objet, **caractérisé en ce qu'**il est déterminé par une centrale d'identité (IDZ) une caractéristique d'identification (IM),
**en ce qu'**après une authentification de l'utilisateur (B) ou d'un représentant d'un objet
**en ce que** la caractéristique d'identification (IM) est mémorisée dans un système de prestation de services (DLS) et associée aux données générales de l'utilisateur (B) ou de l'objet,
**en ce que** la caractéristique d'identification (IM) et une caractéristique (M) du système de prestation de service (DLS) sont transmises à la centrale d'identité (IDZ) et y sont mémorisée ensemble avec un code secret maître et un code de base indépendant (BC),
**en ce que** la centrale d'identité (IDZ) détermine la validité d'un ou de plusieurs codes de base et peut la changer au besoin, l'attribution explicite aux codes maitres (SC) étant conservée,
**en ce que** le code de base (BC) est transmis par la centrale d'identité (IDZ) à un système de génération d'identité (IDG),
**en ce qu'**au moyen d'un procédé déterminable, des codes d'identité (IDC) sont associés explicitement au code de base (BC),
**en ce que** le système de génération d'identité (IDG) bloque les codes d'identité générés (IDC),
que les codes d'identité générés (IDC) sont transmis à un système de gestion d'identité (IDM),
**en ce qu'**à partir des codes d'identité générés (IDC), il est défini une fois des codes d'initialisation (INID) pour le processus d'initialisation qui sont stockés dans la centrale d'identité (IDZ),
**en ce que** les codes d'initialisation (INID) sont transmis ensemble avec les caractéristique d'identification (IM) et une adresse d'accès du système de gestion d'identité (IDM) au système de prestation de service (DLS),
**en ce que** par le système de gestion d'identité (IDM), au moyen de l'adresse d'accès du système de gestion d'identité (IDM), des codes d'initialisation (INID) et des informations secrètes de mot de passe sont réceptionnées, un compte utilisateur pour la génération d'autres codes d'identité (IDC),
**en ce que** le système de gestion d'identité (IDM), reçoit un code d'identité (IDC) et l'analyse.

2. Procédé selon la revendication 1, **caractérisé en ce que** plusieurs codes d'identité (IDC) d'un ou de plusieurs utilisateurs ou objets sont analysés de manière combinée.

3. Procédé selon l'une des revendications 1 à 2, **caractérisé en ce que** l'analyse d'un code d'identité (IDC) est effectuée ensemble avec la consultation d'informations de mot de passe.

4. Procédé selon l'une des revendications 1 à 3, **caractérisé en ce que** la transmission de la caractéristique d'identification (IM) à la centrale d'identité (IDZ) est libérée par l'utilisateur ou le représentant de l'objet.

5. Procédé selon l'une des revendications 1 à 4, **caractérisé en ce que** les données générales de l'utilisateur sont vérifiées et mises à jour dans le système de prestation de service (DLS) par le système de prestation de service (DLS) à des intervalles définis et fixés par le système de génération d'identité (IDG).

6. Procédé selon l'une des revendications 1 à 5, **caractérisé en ce que** la transmission de données entre le système de prestation de service (DLS), le système de génération d'identité (IDG) et/ou le système de gestion d'identité (IDM), s'effectue au moyen d'au moins un réseau de données et/ou d'un réseau de télécommunication.

7. Procédé selon l'une des revendications 1 à 6, **caractérisé en ce que** les informations de mot de passe demandées par le système de gestion d'identité (IDM) sont des réponses aux questions posées par le système de gestion d'identité (IDM) et/ou sont des données qui sont émises par des appareils, tels que des jetons, des cartes à puce ou des téléphones mo iles cellulaires.

8. Procédé selon l'une des revendications 1 à 7, **caractérisé en ce que** le système de gestion d'identité (IDM) commande sur requête de l'utilisateur dans le cadre de la gestion du compte auprès du système de génération d'identité (IDG) d'autres identités qui selon le procédé décrits sont générés, bloqués, transmises au système de gestion d'identité (IDM) et y sont transmis au besoin à l'utilisateur.

9. Procédé selon l'une des revendications 1 à 8, **caractérisé en ce que** la gestion du compte procure à l'utilisateur outre la requête de nouveaux codes d'identité (IDC) d'autres fonctions, telles que la gestion d'une banque de données, la modification de la validité, le blocage, le rattachement à des identités étrangères, la liaison à un compte bancaire, l'accouplement avec des transactions définies et/ou le changement des informations de mot de passe.

10. Procédé selon l'une des revendications 1 à 9, **caractérisé en ce que** l'utilisateur transmet de manière ouverte ou cachée chacun de ses codes d'identité (IDC) à des tiers en déterminant leur validité et fait ainsi en sorte que ces derniers l'identifient rien que sur la base de son identité transmise par le système de gestion d'identité (IDM) et/ou peuvent le faire authentifier en faisant intervenir l'interrogation d'information de mot de passe.

11. Procédé selon l'une des revendications 1 à 10, **caractérisé en ce que** les identifications s'effectuent par la comparaison entre deux codes d'identité (IDC) par le système de gestion d'identité (IDM), l'interrogateur autorisé duquel est transmis e résultat de la vérification et une authentification supplémentaire de l'identité peut être complétée par l'intervention supplémentaire d'une interrogation d'information de mot de passe.

12. Procédé selon l'une des revendications 1 à 11, **caractérisé en ce que** le système de gestion d'identité (IDM) reçoit des combinaisons de codes d'identité (IDC) de différents utilisateurs ou objets pour les stocker lesquels sont transmis par l'utilisateur ou le représentant d'un objet, codes qui sont utilisés par lui-même pour piloter et/ou estimer des transactions futures avec d'autres codes d'identité (IDC) des mêmes partenaires.

13. Procédé selon l'une des revendications 1 à 12, **caractérisé en ce que** des codes d'identité (IDC) d'un utilisateur sont utilisés comme des adresses e-mail et sur sa demande sont rassemblés lors d'une utilisation unique par le système de gestion d'identité (IDM) .

14. Procédé selon l'une des revendications 1 à 13, **caractérisé en ce que** des codes d'identité (IDC) d'un utilisateur peuvent être utilisés sous forme d'adresses téléphoniques ou de numéros de fax et sur sa demande sont rassemblés lors d'une utilisation unique par le système de gestion d'identité (IDM).

15. Procédé selon l'une des revendications 1 à 14, **caractérisé en ce que** des transactions ou processus peuvent être libérés après l'analyse de codes d'identité (IDC) par le système de gestion d'identité (IDM) pour l'utilisateur.

16. Procédé selon l'une des revendications 1 à 15, **caractérisé en ce que** sur la base de l'analyse de codes d'identité (IDC), une transaction financière anonyme peut être déclenchée pour le règlement de prestations de services et/ou de biens.

17. Procédé selon l'une des revendications 1 à 16, **caractérisé en ce que** sur la base de l'analyse de codes d'identité (IDC), des caractéristiques de personnes très sensibles, telles que des codes génétiques, des données biométriques et/ou la clé personnel publique PKI (Public key infrastructure) sont stockées de manière anonyme.

18. Procédé selon l'une des revendications 1 à 17, **caractérisé en ce que** sur demande de l'utilisateur différentes données sont ensemble avec des codes d'identité (IDC) différents de l'utilisateur sont stockées
indépendamment entre elles et sont rassemblées à sa demande.

19. Procédé selon l'une des revendications 1 à 18, **caractérisé en ce que** des données sensibles sur un utilisateur telles que des données sur la santé ou la situation fiscale sont stockées de manière anonyme dans des jeux de données indépendants, sont rassemblées ultérieurement sur demande d'une institution autorisée par l'utilisateur par le système de gestion d'identité (IDM) , l'anonymat étant préservé.

20. Procédé selon l'une des revendications 1 à 19, **caractérisé en ce qu'**il est également possible d'effectuer, d'autoriser ou de bloquer des transactions complexes avec plusieurs partenaires de manière sécurisée par des codes d'identité (IDC), les processus étant définis et mis en oeuvre pour et par le système de gestion d'identité (IDM).

21. Procédé selon l'une des revendications 1 à 20, **caractérisé en ce que** dans le cas d'un risque de sécurité, le système de génération d'identité (IDG) modifie les codes de base (BC) et/ou le procédé de génération de codes d'identité (IDC) à partir de codes de base, les modifications associées étant enregistrées et traçables.

22. Procédé selon l'une des revendications 1 à 21, **caractérisé en ce que** le système de gestion d'identité (IDM) permet l'accès pour le titulaire du compte concerné aux accès enregistrés, tels que les identifications, les authentifications, les mémorisations, les interrogations et/ou les transactions.

23. Procédé selon l'une des revendications 1 à 22, **caractérisé en ce que** la génération de codes d'identité (IDC) et/ou la gestion de ce processus est externalisée en tant que matériel intégré hors du système de génération d'identité.

24. Procédé selon l'une des revendications 1 à 23, **caractérisé en ce qu'**un système globale assisté par ordinateur décentralisé et commandé centralement est réalisé sans que des confusions ou des restrictions de l'univocité se produisent.

25. Procédé selon l'une des revendications 1 à 24, **caractérisé en ce qu'**un système partiel à puce décentralisé à commande centrale est réalisé sans que des confusions ou des restrictions ou l'univocité soient remises en cause.
